(19) Europäisches Patentamt
European Patent Office
Office européen des brevets

(11) Numéro de publication : 0 346 192 B1

# (12) FASCICULE DE BREVET EUROPEEN

(45) Date de publication du fascicule du brevet : **18.08.93 Bulletin 93/33**

(51) Int. Cl.[5] : **C04B 35/80,** C04B 30/02, D01F 9/10

(21) Numéro de dépôt : **89401523.9**

(22) Date de dépôt : **02.06.89**

## (54) Matériau intermédiaire de transformation des précurseurs de céramique procédé de stockage des précurseurs de céramique, leur procédé de fabrication et de transformation du matériau intermédiare.

(30) Priorité : **09.06.88 FR 8807695**

(43) Date de publication de la demande : **13.12.89 Bulletin 89/50**

(45) Mention de la délivrance du brevet : **18.08.93 Bulletin 93/33**

(84) Etats contractants désignés : **AT BE DE FR GB IT NL SE**

(56) Documents cités : **WO-A-88/02741**

(56) Documents cités : **CHEMICAL ABSTRACTS, vol. 91, no. 16, 15 octobre 1979, page 282, no. 127870t, Columbus, Ohio, US; & JP-A-79 15 917 (ISHIKAWA, TAKASHI) 06-02-1979**

(73) Titulaire : **ELF ATOCHEM S.A.**
**4 & 8, Cours Michelet La Défense 10**
**F-92800 Puteaux (FR)**

(72) Inventeur : **Ganga, Roland**
**42bis Ile Fanac**
**F-94340 Joinville Le Pont (FR)**
Inventeur : **Colombier, Christian**
**19, Place Tolozan**
**F-69001 Lyon (FR)**

**EP 0 346 192 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un matériau intermédiaire de transformation des précurseurs de céramique. Le matériau est constitué de fibres continues imprégnées de précurseur de céramique l'ensemble étant isolé de l'atmosphère dans une gaine continue de résine plastique souple. Un tel matériau est obtenu par imprégnation de fibres continues de précurseur céramique avant leur passage au travers d'une résine plastique de gainage.

Ce matériau intermédiaire est particulièrement intéressant pour la fabrication de pièces céramiques difficilement réalisables par moulage direct de précurseur se présentant sous forme liquide ou pour le moins sous forme visqueuse.

Les céramiques les plus connues contiennent généralement au moins un élément métallique, peuvent être cités : les oxydes, comme l'alumine ou la zircone, les nitrures comme $Si_3N_4$, AlN, les siliciures comme $MoSi_2$, $TiSi_2$, les borures comme $TiB_2$, les carbures comme SiC, TiC, $B_4C$, les sulfures comme ThS, CeS. Associées ou non à des fibres ces céramiques servent à la fabrication de produits réfractaires, montrant une bonne résistance à la corrosion, une haute tenue à la température et possédant d'excellentes propriétés mécaniques. Elles se trouvent, dans ces familles, initialement sous forme de poudre que l'on fritte à des températures habituellement supérieures à 1300°C.

Les pièces céramiques sont préparées en plusieurs étapes consistant à fabriquer une préforme (green body), à la fritter et en finition à l'usiner. La préforme peut être préparée par coulage en barbotine consistant à couler dans un moule à parois absorbantes une suspension dans un liquide de poudre céramique et d'adjuvants tels qu' additifs rhéologiques et/ou de frittage, puis à éliminer le liquide. Cette préforme peut encore être préparée par moulage par injection, par extrusion, ou par pressage à froid ou à chaud. Le frittage de la préforme consiste à la chauffer de façon contrôlée à une température élevée, de l'ordre de 1300 à 1800°C, de façon à obtenir la liaison intergranulaire par l'intermédiaire des additifs, connus pour cet effet, incorporés initialement à la poudre céramique. Cette opération de frittage ne permet généralement pas d'obtenir des pièces exemptes de défauts ou aux cotes précises. C'est pourquoi un usinage de finition est souvent utile ce qui nécessite des outillages du type diamanté onéreux et pas toujours de grande efficacité.

Malgré de grandes précautions de fabrication, la qualité et surtout la reproductibilité des pièces obtenues à partir de poudres de céramique sont faibles.

Une nouvelle voie d'élaboration de pièces en céramique fait intervenir la pyrolyse de précurseurs de céramique à des températures d'au moins 800°C, soit à des températures nettement inférieures aux 1300°C minimum nécessaires à la transformation des poudres de céramique. Ces précurseurs, généralement solubles dans les solvants organiques, ce qui permet éventuellement d'abaisser leur viscosité ou de les mettre sous forme de solution, se présentent sous la forme plus ou moins fluide, ou encore sous la forme solide thermoplastique.

Parmi ces précurseurs de céramiques on peut citer :

- les polysilanes de type

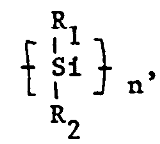

  dans lequel $R_1$ et $R_2$, identiques ou différents sont l'hydrogène ou un radical carboné, précurseurs de céramiques contenant par pyrolyse SiC et C. Ces polysilanes se présentent habituellement sous forme de solides thermoplastiques se ramolissant vers 200°C. Ces produits sont décrits par R. WEST, J. Organometallic Chem., 300 (1986) pages 327-346.
- les polycarbosilanes de type

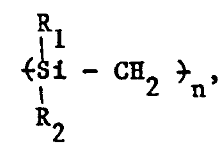

  avec $R_1$ et $R_2$ tels que définis précédemment, précurseurs de céramiques contenant par pyrolyse SiC et C. Ces polycarbosilanes se présentent également habituellement sous forme de solides thermoplastiques. Ces produits sont décrits par Y. HASEGAWA et al., Journal of Materials Science 15 (1980) pp. 720-728.
- les polysilazanes qui contiennent dans leur molécule des liaisons - Si - N -. Ces sont des précurseurs de céramiques contenant par pyrolyse, Si, C et N. Ces produits sont généralement obtenus par réaction de l'ammoniac, d'une hydrazine ou d'une amine comme la méthylamine sur au moins un chlorosilane. Ces précurseurs se présentant généralement sous forme liquide peuvent être soumis à des traitements thermiques ou catalytiques de polymérisation pour faire augmenter leur viscosité et leur rendement en céramique, exprimé par le rapport :

$$\frac{\text{poids de céramique obtenu par pyrolyse}}{\text{poids de précurseur engagé}} \times 100$$

- les polysiloxazanes où alternent dans la molécule les liaisons

$$-\overset{|}{\underset{|}{Si}}-N-\text{ et }-\overset{|}{\underset{|}{Si}}-O-.$$

Ces précurseurs se présentent sous la forme liquide ou solide suivant le degré de polymérisation.

Peuvent encore être cités les précurseurs de BN, de $B_4C$ et d'AlN. De tels précurseurs sont décrits dans Ceramic Bulletin déjà cité ou V. Léonard et al. Mat. Res. Soc. Symp. Proc., Vol. 73, pp. 359-366 (1986).

Grâce à leur propriété de fluidité en basse température tels quels ou en solution et à leur transformation en céramiques à une température nettement plus basse que celles nécessaires au frittage des poudres de céramique, ces précurseurs présentent de grands avantages. Ces caractéristiques facilitent en particulier leur mise en oeuvre.

Un des objets de l'invention est d'améliorer les possibilités de mise en oeuvre de ces précurseurs dans des applications complexes permises par leurs caractéristiques. Selon l'invention, en gainant de façon continue ces précurseurs liquides, thermoplastiques ou pour le moins flexibles à température ambiante d'une gaine de résine plastique souple on obtient un matériau intermédiaire continu souple facilement manipulable qui peut être mis en oeuvre à l'état de préforme, par exemple par enroulement ou tissage, avant tout traitement thermique de transformation en céramique. Un autre avantage de l'invention est de permettre une manipulation sous gaine à l'abri de l'air de certains précurseurs sensibles à l'humidité ambiante. Une fois préformé le précurseur est transformé en céramique par chauffage avec élimination ou destruction de la structure de la gaine par pyrolyse.

Le matériau intermédiaire objet de l'invention est caractérisé en ce qu'il est constitué de fibres continues imprégnées d'une matrice de précurseur de céramique l'ensemble étant gainé de façon continue d'une résine plastique souple. Ce matériau peut être conservé sous forme de bobine avant sa mise en préforme. Il peut donc s'agir là d'un système de conditionnement de précurseur de céramique sous forme de fibres continues imprégnées dudit précurseur l'ensemble se trouvant sous gaine continue de résine plastique souple.

Comme il a été précisé précédemment le précurseur se présente généralement sous forme liquide, visqueuse ou solide thermoplastique. En tout état de cause ces précurseurs sont généralement fusibles à une température inférieure à celle de décomposition de la résine plastique de la gaine. Il est bien entendu qu'au précurseur peut être associé dans la gaine au moins une charge quelconque. Cette charge peut être un réactif quelconque permettant par exemple la réticulation de la résine de gainage ou même du précurseur lui-même. Ce peut être également une poudre céramique ou des whiskers. Dans ces cas le précurseur peut servir de liant de telle façon que se forme un mastic ultérieurement gainé, l'ensemble se trouvant facilement manipulable pour la fabrication d'une préforme de structure complexe. Bien que le rapport de précurseur et de charge ne soit pas critique, pour des facilités de manipulation le rapport en volume de précurseur sur le volume théorique de charge est de préférence supérieur ou égal à 0,75.

Les fibres continues peuvent servir à renforcer le matériau intermédiaire, mais également lui servent d'âme pour faciliter le tirage de la gaine lors de sa fabrication. Dans ces conditions tout type de fibres, organiques ou minérales, peut être imprégné de précurseur. Toutefois lors de la transformation ultérieure en céramique de la préforme fabriquée à partir du matériau intermédiaire de l'invention les fibres sont chauffées à la température de transformation en céramique du précurseur ou de son mélange avec une charge. Si cette température est supérieure à la température de décomposition des fibres ces dernieres peuvent disparaitre lors de la pyrolyse. Il peut être souhaitable d'éviter cette dégradation des fibres qui n'apporte aucune amélioration aux propriétés de la céramique finalement obtenue. Aussi est-il recommandé d'utiliser de préférence des fibres minérales indestructibles à la température de transformation en céramique du matériau objet de l'invention. A titre d'exemples de telles fibres peuvent être citées : les fibres de carbone, les fibres de quartz ou encore les fibres céramiques à base entre autres de carbure ou de nitrure de silicium ou de nitrure de bore comme décrites par A.P. KATZ et al., Ceramic Bulletin, Vol. 66, No. 2, 1987 pages 304-306.

La gaine continue souple est constituée d'une résine plastique inerte aux produits d'imprégnation. Ces résines plastiques peuvent être choisies parmi les résines thermoplastiques et thermodurcissables, l'important étant qu'elles soient inertes vis-à-vis des produits d'imprégnation. En particulier, les résines halogénées ne sont pas recommandées, car lors de la transformation des précurseurs en céramique les produits de décomposition de la résine halogénée peuvent créer des dégradations dans la céramique finale. De même, uniquement pour des questions d'hygiène et de sécurité sachant que toutes précautions peuvent par ailleurs être prises, il est recommandé, sans toutefois les exclure impérativement, de ne pas utiliser les résines dégageant des gaz toxiques lors de leur décomposition. La résine de gainage peut être choisie parmi les polymères se volatilisant sensiblement complètement à la pyrolyse ou encore formant un composé minéral. Parmi les polymères recommandés on peut citer : les polyoléfines et plus particulièrement le polyéthylène, le polypropylène, le polybutadiène, le polyisoprène ; les polysiloxanes ; le polyacrylonitrile les polycarbosilanes.

Par résine plastique souple on entend également tout précurseur de céramique pouvant être réticulé,

insensible à l'air ambiant à l'état réticulé et possédant les propriétés suffisantes de souplesse après réticulation.

L'épaisseur de la gaine n'est pas critique, il est toutefois logique qu'elle soit la plus faible possible afin d'une part de limiter l'évacuation des gaz lors de la pyrolyse et d'autre part de limiter les éventuels défauts dans la céramique finale. Habituellement une épaisseur de gaine de quelques dizaines de microns, 10 à 70 microns par exemple, convient pour maintenir les fibres imprégnées du précurseur.

D'une façon générale, le total en volume des produits liquides ou solides se transformant en gaz lors de la pyrolyse, c'est-à-dire ceux de la gaine, du précurseur et éventuellement des fibres, ne dépasse pas de préférence 80 % en volume du matériau intermédiaire.

Ce matériau intermédiaire est fabriqué par imprégnation de fibres d'un précurseur liquide, l'ensemble étant ensuite gainé d'une résine plastique souple. Les fibres sous forme de mèches continues ou de rovings formés de multifibres sont habituellement imprégnées par passage dans un bain de précurseur liquide. Pour faciliter l'imprégnation à coeur des mèches ou des rovings et le bon enrobage des fibres il peut être utile de les épanouir en écartant les fibres les unes des autres avant le passage dans le bain de précurseur. Si le précurseur est trop visqueux ou même solide s'agissant de précurseur thermoplastique, il peut être chauffé pour faire diminuer sa viscosité ou dissous ou dilué dans un solvant inerte vis-à-vis des différents composants du matériau intermédiaire.

Dans un mode préféré de l'invention, les fibres continues imprégnées sont passées pour le gainage dans une filière d'extrusion alimentée, par une extrudeuse, en résine plastique souple. En sortie d'extrudeuse le matériau intermédiaire, constitué des fibres imprégnées de précurseur l'ensemble étant gainé, est refroidi et stocké par exemple sur bobine.

Les têtes d'extrusion classiques conviennent généralement pour la fabrication des matériaux intermédiaires. Toutefois, certains précurseurs liquides peuvent, aux températures d'extrusion de la gaine, avoir tendance à durcir et à perdre leur souplesse une fois gainée. Pour éviter ce genre de phénomène, il faut dans ces cas, utiliser une tête d'extrusion telle que, compte tenu de la vitesse de production : de l'ordre de 50 à 300 m/min., la température ne dépasse pas 100°C au coeur du préimprégné quelle que soit la température d'extrusion de la gaine. Une telle tête d'extrusion est par exemple décrite dans le US-A 3 773 449.

Dans un autre mode de gainage des fibres continues imprégnées, on fait passer l'ensemble dans une solution de résine plastique puis par évaporation du solvant ou par réticulation de la résine, dans le cas de polymère thermodurcissable ou de précurseur de céramique réticulable, on matérialise la gaine du matériau intermédiaire.

Afin de faciliter la manipulation avant le gainage de l'ensemble fibres imprégnées de précurseur, il peut être recommandé de stabiliser le précurseur sur les fibres. Pour ce faire on peut augmenter la viscosité du précurseur en incorporant une charge au bain de précurseur liquide. Cette charge peut être sous forme de poudre ou whiskers de céramiques. De même afin de ne pas mélanger de charge au bain de précurseur, il est recommandé de faire passer les fibres imprégnées de précurseur dans une ambiance de charge poudreuse, qui peut être une céramique, de façon à enrober les mèches ou les rovings de poudre par collage sur le précurseur fluide. Cet enrobage peut se faire par passage direct des fibres imprégnées dans la poudre ou encore par passage dans un lit fluidisé de poudre. Le matériau intermédiaire, prêt à l'emploi tel quel, permet de stocker à l'abri de l'air le précurseur avant son utilisation. Un autre objet de l'invention concerne donc également un moyen de stockage d'un précurseur céramique constitué d'une gaine continue de résine plastique souple enrobant un faisceau de fibres continues parallèles servant à retenir le précurseur. Au moins la gaine de ce moyen de stockage est détruite par pyrolyse lors de la mise en oeuvre du précurseur.

Le matériau intermédiaire utilisé tel quel est transformé en céramique par action de la température. A une température d'au moins 800°C la gaine et éventuellement les fibres sont détruites et plus ou moins éliminées par pyrolyse tandis que parallèlement, au fur et à mesure de la décomposition de la gaine, le précurseur se transforme en céramique.

L'exemple suivant illustre l'invention sans toutefois la limiter.

## EXEMPLE

On prépare un silazane dans les conditions suivantes.

La réaction a lieu dans un réacteur double enveloppe équipé d'un thermomètre, d'un système d'agitation, d'un condenseur (15°C) et d'une arrivée d'azote. Après purge du réacteur à l'azote, on y verse à 15°C 600 ml de toluène, 3 moles de triéthylamine et 0,8 mole de $CH_3$ Si $HCl_2$ et 0,2 mole de $(CH_3)_2$ Si $Cl_2$. On ajoute sous agitation 1 mole d'hydrazine anhydre en 30 mn. à débit constant.

On élève ensuite la température du réacteur à 60°C pendant 6 heures. On envoie alors à travers la bouillie 0,5 mole d'ammoniac pur avec un débit constant de 20 l/h.

On ramène ensuite la température du réacteur à 15°C et on laisse reposer la bouillie 15 h. sous faible agitation. On filtre le précipité sous pression d'azote, on le lave au toluène et on procède à l'évaporation du solvant et des restes de réactifs à l'aide d'un évaporateur rotatif à 60°C sous pression progressivement

réduite de 20000 Pa jusqu'à 70 Pa en fin d'évaporation. On laisse 1/2 h. à 60°C sous 70 Pa. On recueille 58,5 g. de silazane visqueux (viscosité ≃ 800 poises). Ce silazane présente un rendement en céramique de 66 %. Il se transforme par réticulation à température ambiante en une gomme flexible en quelques jours.

Une mêche continue de carbure de silicium ( NICALON ®) constituée de 500 fibres de 200 tex, chaque fibre unitaire possédant un diamètre moyen d'environ 15 microns, est entrainée dans un bac sous atomosphère d'azote contenant le silazane précédent, en solution à 50 % en poids dans le toluène.

Dans le bac est placé un système d'embarrage permettant d'épanouir la mêche de façon à séparer les fibres les unes des autres pour permettre une bonne dispersion du précurseur dans la mêche.

En sortie d'imprégnation la mêche séchée pour éliminer le toluène est tirée, toujours sous atomosphère d'azote, pour être gainée de polyéthylène de densité 0,920 et d'indice de fluidité (Melt Index) de 0,20. Le gainage s'effectue dans une tête d'extrudeuse Maillefer 30 à tête de recouvrement tubulaire. Le diamètre de la filière est de 3,5 mm, celui du poinçon de 2,9 mm, celui du guide fil de 1,5 mm, celui de l'entrée de la filière de 2,4 mm. La température de la filière est de 200°C et la vitesse de tirage est de 30 m./min.

Le matériau intermédiaire obtenu après refroidissement contient en volume

35% de fibres de carbure de silicium
50 % de précurseur
15 % de gaine

Le matériau intermédiaire est tissé en nappe. Le tissu obtenu est chauffé sous courant d'azote à la vitesse de 100°C/h. jusqu'à 1000°C suivi d'un pallier de 1 h. à 1000°C. Pendant toute l'étape de pyrolyse le tissu est maintenu entre deux plaques d'alumine frittée, sous une pression de 5 kg/cm$^2$.

On obtient une plaque poreuse composite dont le poids est environ 82 % du poids du tissu initial. Cette plaque peut être réimprégnée par un précurseur de céramique fluide.

## Revendications

1. Matériau intermédiaire à base de précurseur de céramique constitué de fibres continues imprégnées d'une matrice de précurseur de céramique, l'ensemble étant gainé de façon continue d'un polymère plastique souple.

2. Matériau intermédiaire selon la revendication 1 caractérisé en ce que le précurseur est fusible a une température inférieure à celle de décomposition de la résine plastique.

3. Matériau intermédiaire selon l'une des revendications 1 ou 2 caractérisé en ce qu'une charge est associée au précurseur.

4. Matériau intermédiaire selon la revendication 3 caractérisé en ce que la charge est choisie parmi les poudres céramiques et les whiskers.

5. Matériau intermédiaire selon l'une des revendications 3 à 4 caractérisé en ce que le rapport en volume de précurseur sur le volume théorique de charge est supérieur ou égal à 0,75.

6. Matériau intermédiaire selon l'une des revendications 1 à 5 caractérisé en ce que les fibres sont des fibres minérales indestructibles à la température de transformation en céramique dudit matériau intermédiaire.

7. Matériau intermédiaire selon l'une des revendications 1 à 6 caractérisé en ce que la résine plastique souple est choisie parmi les résines thermoplastiques et thermodurcissables non halogénées inertes vis-à-vis des produits d'imprégnation.

8. Matériau intermédiaire selon l'une des revendications 1 à 6 caractérisé en ce que la résine plastique souple est un précurseur de céramique réticulable.

9. Matériau intermédiaire selon l'une des revendications 1 à 8 caractérisé en ce que le total en volume des produits se volatilisant à la pyrolyse de la gaine et éventuellement des fibres ne dépasse pas 80% du volume dudit matériau intermédiaire.

10. Procédé de stockage d'un précurseur de céramique caractérisé en ce que'un faisceau de fibres continues parallèles est imprégné du dit précurseur, l'ensemble étant ensuite gainé de façon continue d'un polymère plastique souple.

11. Procédé de stockage d'un précurseur de céramique selon la revendication 10 dont les caractéristiques du précurseur, de la gaine et des fibres sont conformes aux revendications 2 à 9.

12. Procédé de fabrication du matériau intermédiaire selon la revendication 1 à 9 consistant à gainer de façon continue d'une résine plastique souple des mêches ou rovings de fibres parallèles continues imprégnées de matière caractérisé en ce que les fibres sont imprégnées par un précurseur de céramique.

13. Procédé selon la revendication 12 caractérisé en ce que le précurseur est associé à un solvant inerte vis-à-vis des différents composants.

**14.** Procédé selon l'une des revendications 12 ou 13 caractérisé en ce que préalablement au gainage on fait passer les mêches ou rovings de fibres imprégnées de précurseur dans une ambiance de charge poudreuse de façon à enrober les mêches ou les rovings de poudre par collage sur le précurseur.

**15.** Procédé selon la revendication 14, caractérisé en ce que la charge poudreuse est une céramique ou whisker.

**16.** Procédé de stockage d'un précurseur de céramique consistant à faire passer des mêches ou des rovings de fibres parallèles dans le précurseur à l'état au moins visqueux puis à gainer de façon continue l'ensemble d'une résine plastique souple.

**17.** Procédé selon la revendication 16 caractérisée en ce que le précurseur est associé à un solvant inerte vis-à-vis des différents composants.

**18.** Procédé selon l'une des revendications 16 ou 17 caractérisé en ce que préalablement au gainage on fait passer les mêches ou rovings de fibres imprégnées de précurseur dans une ambiance de charge poudreuse de façon à enrober les mêches ou les rovings de poudre par collage sur le précurseur.

**19.** Procédé selon la revendication 18 caractérisé en ce que la charge est une céramique sous forme de poudre ou de whiskers.

**20.** Procédé de transformation du précurseur du matériau intermédiaire des revendications 1 à 9 ou stocké selon les revendications 10 et 11 caractérisé en ce que la gaine contenant le précurseur est mise à l'état de préforme qui est ensuite chauffée à au moins 800°C.

**Patentansprüche**

**1.** Zwischenprodukt auf Basis einer Keramikvorstufe, die aus Endlosfasern besteht, die mit einer Matrix aus einer Keramikvorstufe imprägniert werden, wobei alles zusammen kontinuierlich von einem weichen plastischen Polymer umhüllt wird.

**2.** Zwischenprodukt nach Anspruch 1, dadurch gekennzeichnet, daß die Vorstufe bei einer Temperatur schmelzbar ist, die unter der Zersetzungstemperatur des plastischen Harzes liegt.

**3.** Zwischenprodukt nach einer der Ansprüche 1 oder 2, dadurch gekennzeichnet, daß der Vorstufe ein Füllstoff zugesetzt wird.

**4.** Zwischenprodukt nach Anspruch 3, dadurch gekennzeichnet, daß der Füllstoff unter den keramischen Pulvern und Whiskern ausgewählt wird.

**5.** Zwischenprodukt nach einer der Ansprüche 3 bis 4, dadurch gekennzeichnet, daß das Verhältnis des Vorläufervolumens zum theoretischen Volumen des Füllstoffes größer oder gleich 0,75 ist.

**6.** Zwischenprodukt nach einer der Ansprüche 1 bis 5, dadurch gekennzeichnet, daß die Fasern Mineralfasern sind, die bei der Umwandlungstemperatur des besagten Zwischenproduktes zu Keramik, unzerstörbar sind.

**7.** Zwischenprodukt nach einer der Ansprüche 1 bis 6, dadurch gekennzeichnet, daß das weiche plastische Harz unter denjenigen nicht halogenierten Thermo- und Duroplasten ausgewählt wird, die gegenüber den Imprägnierungsprodukten inert sind.

**8.** Zwischenprodukt nach einer der Ansprüche 1 bis 6, dadurch gekennzeichnet, daß das weiche plastische Harz eine Vorstufe für vernetzbare Keramik ist.

**9.** Zwischenprodukt nach einer der Ansprüche 1 bis 8, dadurch gekennzeichnet, daß das Gesamtvolumen der bei der Pyrolyse der Hülle und gegebenfalls der Fasern flüchtigen Produkte nicht 80 % des Volumens des besagten Zwischenproduktes überschreitet.

**10.** Verfahren zur Lagerung einer Keramikvorstufe, dadurch gekennzeichnet, daß ein Bündel paralleler Endlosfasern mit besagter Vorstufe imprägniert wird, und anschileßend alles zusammen kontinuierlich von einem weichen plastischen Polymer umhüllt wird.

**11.** Verfahren zur Lagerung einer Keramikvorstufe nach Anspruch 10, bei dem die Kennzeichen der Vorstufe, der Hülle und der Fasern mit den Ansprüchen 2 bis 9 im Einklang stehen.

**12.** Verfahren zur Herstellung des Zwischenproduktes nach den Ansprüchen 1 bis 9, das darin besteht, daß Stränge paralleler, mit einem Produkt imprägnierter Endlosfasern kontinuierlich von einem weichen plastischen Harz umhüllt werden, dadurch gekennzeichnet, daß die Fasern mit einer Keramikvorstufe imprägniert wurden.

**13.** Verfahren nach Anspruch 12, dadurch gekennzeichnet, daß die Vorstufe mit einem gegenüber den unterschiedlichen Komponenten Inerten Lösemittel versetzt wird.

**14.** Verfahren nach einer der Ansprüche 12 oder 13, dadurch gekennzeichnet, daß die mit der Vorstufe imprägnierten Faserstränge vor der Umhüllung eine Umgebung mit Füllstoffpulver durchlaufen, so daß die Faserstränge von Pulver, das auf der Vorstufe haften bleibt, umhüllt sind.

**15.** Verfahren nach Anspruch 14, dadurch gekennzeichnet, daß der pulverförmige Füllstoff ein keramisches Produkt oder Whisker ist.

**16.** Verfahren zur Lagerung einer Keramikvorstufe, das darin besteht, die Stränge paralleler Fasern durch die Vorstufe im Zustand niedrigster Viskosität laufen zu lassen, und dann alles zusammen kontinuierlich mit einem weichen plastischen Harz zu umhüllen.

**17.** Verfahren nach Anspruch 16, dadurch gekennzeichnet, daß die Vorstufe mit einem gegenüber den unterschiedlichen Komponenten inerten Lösemittel versetzt wird.

**18.** Verfahren nach einer der Ansprüche 16 oder 17, dadurch gekennzeichnet, daß die gleichen mit der Vorstufe imprägnierten Faserstränge vor der Umhüllung eine Umgebung mit Füllstoffpulver durchlaufen, so daß die Faserstränge von Pulver, das auf der Vorstufe haften bleibt, umhüllt sind.

**19.** Verfahren nach Anspruch 18, dadurch gekennzeichnet, daß der Füllstoff ein keramisches Pulver oder ein Whisker ist.

**20.** Verfahren zur Umwandlung der Vorstufe des Zwischenproduktes nach den Ansprüchen 1 bis 9 oder gelagert nach den Ansprüchen 10 und 11, dadurch gekennzeichnet, daß die die Vorstufe enthaltende Hülle in die vorläufige Form gebracht und anschließend auf mindestens 800°C erhitzt wird.

## Claims

**1.** Intermediate material based on a ceramic precursor consisting of continuous fibres impregnated with a ceramic precursor matrix, the unit being sheathed continuously by a flexible plastic polymer.

**2.** Intermediate material according to Claim 1, characterised in that the precursor melts at a temperature which is less than the decomposition temperature of the plastic resin.

**3.** Intermediate material according to one of Claims 1 and 2, characterised in that a filler is associated with the precursor.

**4.** Intermediate material according to Claim 3, characterised in that the filler is chosen from the ceramic powders and the whiskers.

**5.** Intermediate material according to one of Claims 3 to 4, characterised in that the ratio by volume of precursor to the theoretical filler volume is greater than or equal to 0.75.

**6.** Intermediate material according to one of Claims 1 to 5, characterised in that the fibres are inorganic fibres which are indestructible at the ceramic conversion temperature of the said intermediate material.

**7.** Intermediate material according to one of Claims 1 to 6, characterised in that the flexible plastic resin is chosen from the non-halogenated thermoplastic and thermosetting resins which are inert with respect to the impregnation products.

**8.** Intermediate material according to one of Claims 1 to 6, characterised in that the flexible plastic resin is a ceramic precursor which can be crosslinked.

**9.** Intermediate material according to one of Claims 1 to 8, characterised in that the total by volume of the products which can be volatilised by pyrolysis of the sheath and optionally of the fibres does not exceed 80% of the volume of the said intermediate material.

**10.** Method for storing a ceramic precursor, characterised in that a bundle of parallel continuous fibres is impregnated with the said precursor, the unit being then sheathed continuously by a flexible plastic polymer.

**11.** Method for storing a ceramic precursor, according to Claim 10, whose precursor, sheath and fibre characteristics are in conformity with Claims 2 to 9.

**12.** Method for manufacturing the intermediate material according to Claims 1 to 9, consisting in sheathing continuously, with a flexible plastic resin, strands or rovings of continuous parallel fibres impregnated with material, characterised in that the fibres are impregnated with a ceramic precursor.

**13.** Method according to Claim 12, characterised in that the precursor is associated with a solvent which is inert with respect to the various components.

**14.** Method according to one of Claims 12 and 13, characterised in that, prior to sheathing, the strands or rovings of precursor-impregnated fibres are passed through an environment of pulverulent filler in order to coat the strands or rovings with powder by adhesive bonding onto the precursor.

**15.** Method according to Claim 14, characterised in that the pulverulent filler is a ceramic or a whisker.

**16.** Method for storing a ceramic precursor, consisting in passing strands or rovings of parallel fibres into the precursor in an at least viscous state, then in sheathing the unit continuously with a flexible plastic resin.

**17.** Method according to Claim 16, characterised in that the precursor is associated with a solvent which is inert with respect to the various components.

**18.** Method according to one of Claims 16 and 17, characterised in that, prior to sheathing, the strands or rovings of precursor-impregnated fibres are passed through an environment of pulverulent filler in order to coat the strands or rovings with powder by adhesive bonding onto the precursor.

**19.** Method according to Claim 18, characterised in that the filler is a ceramic in the form of a powder or of whiskers.

**20.** Method for converting the precursor of the intermediate material of Claims 1 to 9 or stored according to Claims 10 and 11, characterised in that the sheath containing the precursor is shaped into a preform which is then heated to at least 800°C.